# EUROPÄISCHE PATENTSCHRIFT

(11) **EP 1 203 879 B1**
(45) Veröffentlichungstag und Bekanntmachung des Hinweises auf die Patenterteilung: **29.07.2009**
(21) Anmeldenummer: 01125728.4
(22) Anmeldetag: 27.10.2001
(51) Int. Cl.: F02K 9/64

(54) **Brennkammer für Raketen mit Kühleinrichtung**
Cooling for a combustion chamber for rockets
Structure de refroidissement pour la chambre de combustion de moteurs-fusées

(30) Priorität: 02.11.2000 DE 10054333
(43) Veröffentlichungstag der Anmeldung: 08.05.2002
(73) Patentinhaber: Astrium GmbH, 82024 Taufkirchen (DE)
(72) Erfinder: Bichler, Peter, 86938 Schondorf (DE); Immich, Hans, Dr., 85521 Ottobrunn (DE); Kretschmer, Joachim, 82340 Feldafing (DE); Schmidt, Günther, Prof. Dr., 82024 Taufkirchen (DE)
(74) Vertreter: Ulrich, Thomas

(56) Entgegenhaltungen:
- EP-A- 0 530 721
- DE-A1- 19 901 422
- DE-B- 1 258 194
- US-A- 2 476 185
- US-A- 5 233 755

## Beschreibung

Die vorliegende Erfindung betrifft eine Brennkammer für ein Raketentriebwerk zum Ausstoß einer heißen Gasströmung, aufweisend eine Kühleinrichtung sowie eine an die Kühleinrichtung zum Inneren der Brennkammer hin angrenzende innere Brennkammerwand.

Die an eine Brennkammerwand angrenzende Kühleinrichtung einer Brennkammer hat üblicherweise das Ziel, die Brennkammerwand gegenüber den heißen Verbrennungsgasen so kühl zu halten, dass eine ausreichende Lebensdauer der Brennkammer erzielt wird. Bei speziellen Arten von Raketentriebwerken wie regenerativ gekühlten Triebwerken ist es jedoch gerade wünschenswert, einen höheren Wärmeeintrag in die Kühleinrichtung zu erzielen, da bei diesen Raketentriebwerken die von der Kühleinrichtung aufgenommene Wärmemenge zum effektiven Betrieb des Triebwerkes, beispielsweise zum Antrieb von Treibstoffpumpen, weiterverwendet wird. Hier tritt der Fall auf, dass ein umso effektiverer Betrieb des Triebwerkes ermöglicht wird, je höher die von der Kühleinrichtung aufgenommene Wärmemenge ist.

Die US-A 2,476,185 beschreibt eine Brennkammer, in der eine geeignete Kühlflüssigkeit am oberen Ende der Brennkammer durch tangentiale Düsen eintritt. Die Innenwand der Brennkammer ist mit gewindeartig schraubenförmig verlaufenden Nuten versehen. Die Strömung der Fluide verläuft dabei in Richtung dieser Nuten vom tangentialen Eintritt bis zum axial durchströmten Düsenbereich.

Die US-A 5,233,755 und die DE 199 01 422 A1 beschreiben Brennkammern mit Wellen, Riffeln oder Rippen in Längsrichtung der inneren Brennkammerwand, wobei die Strömung der Fluide in Längsrichtung der Brennkammer, also in Richtung der Rippen verläuft.

Die EP 0 530 721 A1 beschreibt einen Wärmeübertrager mit einer Wand, welche mit Rippen besetzt ist. Diese Rippen verlaufen wellenartig, wobei sich diese wellenartigen Rippen im Kühlkanal und nicht auf einer Heißkammerwand einer Brennkammer befinden.

Die DE 1 258 194 B offenbart eine Flüssigkeitseinspritzvorrichtung für eine Raketenbrennkammer, bei der die Innenwand der Brennkammer an ihrem Innenumfang mit in Axialrichtung voneinander beabstandeten trapezförmigen Umfangsnuten versehen ist. In die schrägen Flanken dieser trapezförmigen Umfangsnuten münden - in Umfangrichtung voneinander beabstandet - abwechselnd Einspritzdüsen für eine erste und eine zweite Treibstoffkomponente. Die Bohrungen dieser Einspritzdüsen stehen dabei jeweils in einem Winkel zur Längsachse der Brennkammer. Die Einspritzdüsen für die erste und zweite Treibstoffkomponente sind an jedem Umfangsort, an dem Düsen vorgesehen sind, jeweils paarweise angeordnet, wobei sich die Bohrungsachsen der jeweils zu einem Düsenpaar gehörenden beiden Düsen in einem Punkt im Inneren der Brennkammer schneiden. Hierdurch soll erreicht werden, dass eine bessere Zerstäubung der beiden Treibstoffkomponenten in der Brennkammer erfolgt und damit der Verbrennungsprozess verbessert wird.

Eine andere Möglichkeit zur Erhöhung des Wärmeeintrages ist aus der DE 199 01 422 bekannt. Dort wird eine Brennkammer mit Längsrippen beschrieben, welche einen Kühlkanal für ein Kühlmittel beinhalten. Die Erhöhung des Wärmeeintrages erfolgt somit durch eine Vergrößerung der inneren Oberfläche der Brennkammer. Nachteilig dabei ist jedoch, dass die Herstellung solcher Längsrippen einerseits fertigungstechnisch sehr aufwendig ist und andererseits zu einer Vergrößerung der Masse des Triebwerkes führt.

Eine anderen Alternative zur Vergrößerung der inneren Oberfläche der Brennkammer ist in DE 1 135 405 und US 5,221,045 beschrieben. Dort werden Kühlröhren durch abschnittsweise Aufwölbung der inneren Brennkammerwandstruktur gebildet. Nachteilig hierbei ist wiederum der hohe verfahrenstechnische Aufwand zur Herstellung, aber auch die geringe Stabilität und Belastbarkeit der Struktur.

Als weitere Alternativen wären einerseits eine Verlängerung der Brennkammer zur Erhöhung der inneren Oberfläche denkbar, was jedoch bei einer nicht selten vorgegebenen Gesamtlänge des Triebwerkes zu einer Verkürzung der Schubdüse führen würde, die wiederum eine Reduzierung der Triebwerksleistung zur Folge hätte. Eine andere denkbare Maßnahme wäre auch eine Reduzierung der heissgasseitigen Temperatur der Brennkammerwand. Es lässt sich jedoch durch die üblichen Maßnahmen bei Kühleinrichtungen mit einem Kühlmittel die Differenz zwischen der Gastemperatur der heissen Gasströmung und der Temperatur der Brennkammerwand nur geringfügig erhöhen, wobei jedoch ein stark erhöhter Druckabfall im Kühlmittel in Kauf genommen werden müsste, welcher bei regenerativ gekühlten Triebwerken wiederum eine Reduzierung des Brennkammerdruck zur Folge hätte.

Aufgabe der vorliegenden Erfindung ist es daher, eine Brennkammer für ein Raketentriebwerk bereitzustellen, die auf einfache Weise einen erhöhten Wärmeeintrag in eine Kühleinrichtung ermöglicht.

Diese Aufgabe wird gelöst durch die Merkmale des Anspruchs 1.

Es ist dabei eine Brennkammer für ein Raketentriebwerk zum Ausstoß einer heissen Gasströmung vorgesehen, aufweisend eine Kühleinrichtung sowie eine an die Kühleinrichtung zum Inneren der Brennkammer hin angrenzende innere Brennkammerwand. Erfindungsgemäß weist nun die innere Brennkammerwand Vertiefungen auf, die derart ausgebildet sind, dass eine stabile Grenzschicht der Gasströmung, die im Betrieb der Brennkammer im Bereich der inneren Brennkammerwand ausgebildet wird, im Bereich der Vertiefungen strömungstechnisch destabilisiert wird. Die Erfindung setzt somit bei einer anderen Problematik an als der Stand der Technik. Es zeigt sich, dass die Gasströmung in der Brennkammer im Bereich der Brennkammerwand für den Normalfall einer glatten Brennkammerwand eine Grenzschicht ausbildet, die eine gewisse thermische Isolationswirkung entgegen dem Wärmeeintrag von der heissen Gasströmung in die Brennkammerwand entfaltet. Die vorliegende Erfindung sieht nun vor, die Ausbildung dieser thermisch isolierenden Grenzschicht systematisch zu stören, wodurch der Wärmeeintrag in die Brennkam-merwand deutlich erhöht werden kann. Die erfindungsgemäße Maßnahme bedeutet nur eine verschwindend geringe Beeinflussung der Eigenschaften der gesamten Brennkammer, da die Vertiefungen derart vorgesehen werden, dass deren Einfluss sich faktisch auf die thermisch isolierende Grenzschicht beschränken lässt.

Aus H. Immich et al, "Cryogenic Liquid Rocket Engine Technology Developments within the German National Technology Programme", AIAA 97-2822, 33^{rd} AIAA/ASME/SAE/ASEE Joint Propulsion Conference & Exhibit, July 6-9, 1997, Seattle, WA, Seite 13 ist zwar bekannt, dass grundsätzlich eine Erhöhung des heissgasseitigen Wärmeeintrages möglich ist, wenn die Ausbildung der thermisch isolierenden Grenzschicht gestört wird. Jedoch ist in diesem Stand der Technik kein geeignetes Mittel angegeben, mit dem eine solche Maßnahme erfolgreich umgesetzt werden kann. Vielmehr wird in diesem Dokument davon ausgegangen, dass eine Umsetzung dieser Maßnahme technisch sehr schwierig sei und daher abgelehnt wird. Durch die erfindungsgemäße Vorsehung geeignet angepasster Vertiefungen in der Brennkammerwand als Lösung für die genannte Problematik wird nach der vorliegenden Erfindung nun eine einfach zu bewerkstelligende Maßnahme bereitgestellt, die die Nachteile des bisherigen Standes der Technik auf einfache Weise behebt, da diese Vertiefungen ohne großen Aufwand in die innere Brennkammerwand eingebracht werden können.

Bevorzugt ist vorgesehen, dass die Vertiefungen eine Tiefe aufweisen, die maximal die Hälfte der Dicke der inneren Brennkammerwand beträgt. Insbesondere kann dabei die Dimensionierung der Vertiefungen an der Ausdehnung der thermisch isolierenden Grenzschicht ausgerichtet werden. So kann vorgesehen werden, dass die Vertiefungen eine Tiefe aufweisen, die maximal gleich der Dicke der thermisch isolierenden Grenzschicht ist.

Es können unterschiedliche Arten von Vertiefungen vorgesehen werden, um den gewünschten Effekt zu erzielen. So können beispielsweise die Vertiefungen durch eine aufgerauhte Oberfläche gebildet werden, welche z.B. durch geeignete Strahlmittel erzeugt werden kann.

Alternativ können auch die Vertiefungen als Rillen ausgebildet sein, die um maximal 45° gegen die Umfangsrichtung der Brennkammer geneigt sind. Diese können dabei als geschlossene Rillen oder auch als Gewinde mit mindestens einer Gewindewendel ausgebildet sein. Gerade die Ausbildung als Gewinde gibt die Möglichkeit zu einer besonders einfachen Herstellung der Vertiefungen.

Die Formgebung der Vertiefungen kann, soweit sie nicht durch die Herstellungsweise automatisch vorgegeben ist, nach verschiedenen Kriterien optimiert werden. So kann der Querschnitt der Vertiefungen in Form eines Kreissegmentes ausgebildet sein, wobei der Radius des Kreissegments größer oder gleich der Tiefe der Vertiefungen ist. Dadurch kann die Kerbwirkung der Vertiefungen herabgesetzt werden, was zu einer Erhöhung der Lebensdauer der Brennkammer führt.

Durch eine Variation der Dichte der Anzahl der Vertiefungen - also insbesondere der Anzahl der Vertiefungen pro Flächeneinheit für den Fall einer aufgerauhten Oberfläche oder der Anzahl der Vertiefungen pro Längeneinheit für den Fall von Rillen - kann die Störwirkung der Vertiefungen auf die thermisch isolierendeGrenzschicht lokal variiert werden und so der lokale Wärmeeintrag für jeden Bereich der Brennkammerwand an die jeweiligen Gegebenheiten und Erfordernisse angepasst werden. Es wird also bevorzugt vorgesehen, dass die innere Brennkammerwand Bereiche mit unterschiedlicher Dichte der Anzahl von Vertiefungen aufweist. Insbesondere kann dabei eine Brennkammer betrachtet werden, die an einem ersten Ende einen Einspritzkopf aufweist und an einem dem ersten Ende gegenüberliegenden Ende einen Brennkammerhals als Auslassöffnung für die Gasströmung besitzt. Es treten bei solchen Brennkammern im Bereich des Brennkammerhalses besonders hohe Werte für den Wärmefluss auf.

Um diese abzusenken, kann im Bereich stromaufwärts des Brennkammerhals eine höhere Dichte der Anzahl der Vertiefungen vorgesehen werden. Damit kann ein erhöhter Teil der Wärme bereits vor Erreichen des Düsenhalses in die Brennkammerwand abgeführt werden. Andererseits weist eine vorstehend beschriebenen Brennkammer im Bereich des Einspritzkopfes einen relativ geringen Wärmefluss auf, da die Gasströmung in diesem Bereich eine geringere Temperatur besitzt als weiter stromabwärts. Wird nun in diesem Bereich der Brennkammerwand eine höhere Dichte der Anzahl der Vertiefungen vorgesehen, so kann der Wärmeeintrag in die Brennkammerwand angehoben werden, so dass der lokale Wärmeeintrag an dieser Stelle an den lokalen Wärmeeintrag in weiter stromabwärts gelegenen Bereichen der Brennkammerwand angeglichen werden kann. Man erzielt damit einen gleichmäßigeren Wärmeeintrag über die gesamte Länge der Brennkammer. Die Erhöhung der Dichte der Anzahl der Vertiefungen in einzelnen Bereichen der Brennkammerwand kann alternativ oder kumulativ zueinander erfolgen.

Ein spezielles Ausführungsbeispiel der vorliegenden Erfindung wird nachfolgend anhand der Figuren 1 bis 4 erläutert.

Es zeigen:
- Fig. 1:: Raketentriebwerk mit regenerativer Kühlung nach dem Hauptstromverfahren ohne Vorverbrennung (Expander-Verfahren)
- Fig. 2:: Querschnitt durch eine Brennkammer mit Querrillen
- Fig. 3:: Schematische Darstellung der Größenverhältnisse von Brenkammer-Wanddicke und Rillentiefe
- Fig. 4:: Darstellung der Geometrie der Querrillen

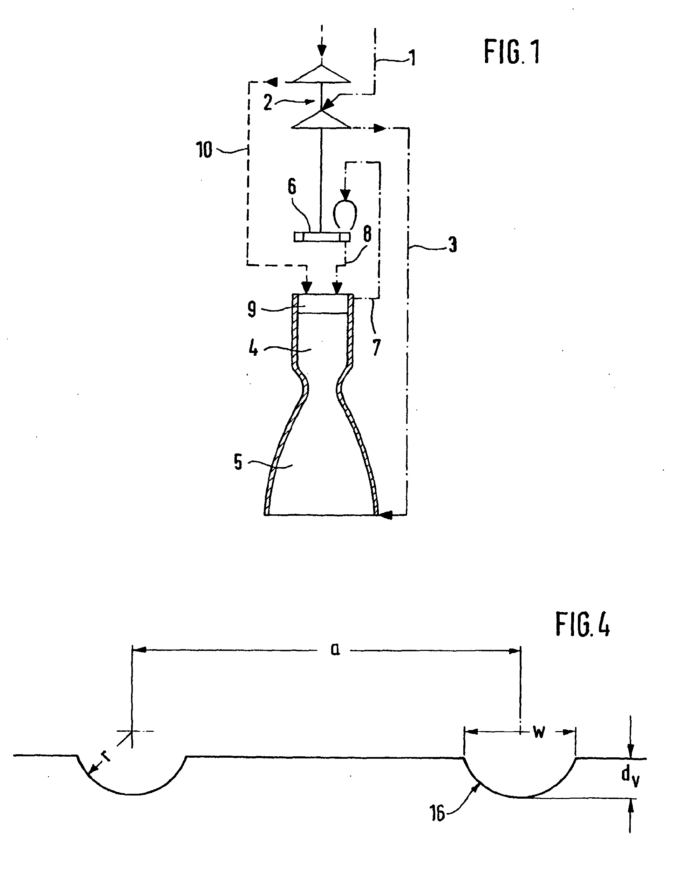

Fig. 1 zeigt beispielhaft einen speziellen Typ eines Raketentriebwerkes, der nach dem Hauptstromverfahren ohne Vorverbrennung, auch genannt Expander-Verfahren, arbeitet. Es wird dabei ein erster Treibstoff in einer ersten Zuleitung 1 einer Treibstoffpumpe 2 zugeführt. Von dort zweigt eine Zuführung 3 ab, die den ersten Treibstoff einer Kühleinrichtung zuführt, welche zur Kühlung der Wand der Brennkammer 4 und gegebenenfalls auch der Schubdüse 5 des Raketentriebwerkes dient. Im Rahmen der Kühlung nimmt der erste Treibstoff Wärme aus der Brennkammer 4 und gegebenenfalls der Schubdüse 5 auf. Eine weitere Zuführung 7 führt den ersten Treibstoff mit der in ihm gespeicherten thermischen Energie aus der Brennkammer ab. Diese thermische Energie wird zum Antrieb einer Turbine 6 genutzt, die die Treibstoffpumpe 2 antreibt. Danach wird der erste Treibstoff über eine Zuführung 8 dem Einspritzkopf 9 des Raketentriebwerkes zugeführt und zur Verbrennung in die Brennkammer 4 eingespritzt. Der zweite Treibstoff wird direkt nach passieren der Treibstoffpumpe 2 duch die Zuführung 10 dem Einspritzkopf 9 zugeführt und ebenfalls in die Brennkammer eingespritzt.

Um bei dem vorstehend beschriebenen Triebwerk möglichst hohe Brennkammerdrücke zu erzielen, die einen möglichst effektiven Betrieb des Triebwerkes gewährleisten, ist es erforderlich, dass eine möglichst große Wärmemenge vom ersten Treibstoff beim Durchlauf durch die Kühleinrichtung aufgenommen wird, damit der Treibstoff mit möglichst hoher Temperatur in die Turbine eintreten kann und eine entsprechend hohe Verdichtung der zugeführten Treibstoffe in den Treibstoffpumpen erzeugt werden kann.

Es sei anzumerken, dass abweichend von dem Hauptstrom-Prinzip statt des ersten Treibstoffes grundsätzlich auch ein anderes Kühlmittel für die Kühlung der Brennkammerwand verwendet werden kann oder auch eine andere Art von Kühleinrichtungen vergesehen werden kann. Die vorliegene Erfindung ist daher nicht ausschließlich auf solche speziellen Triebwerke beschränkt.

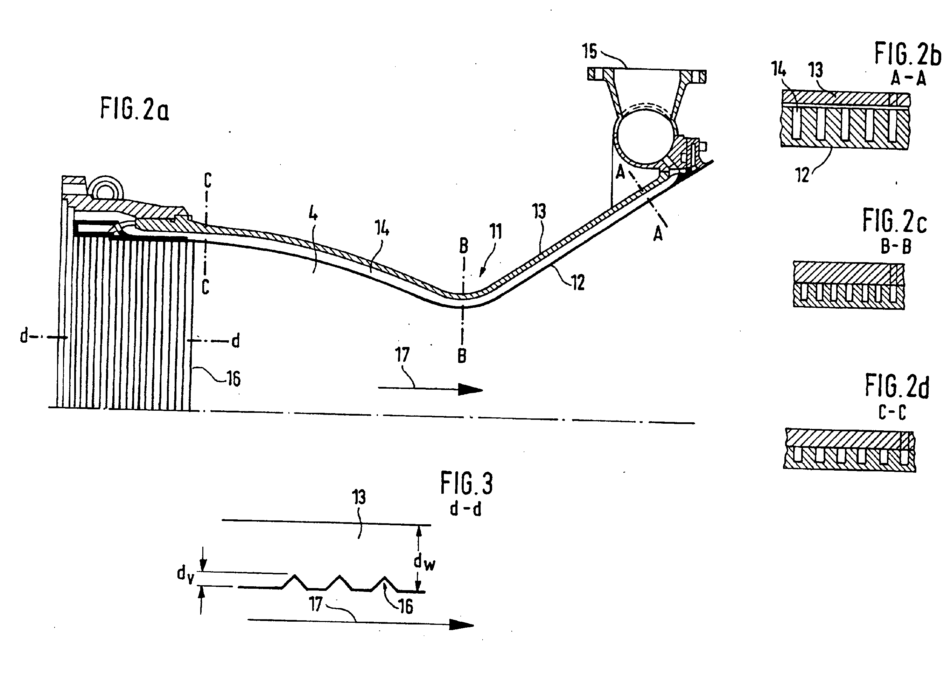

Die Querschnittdarstellung der Fig. 2 zeigt detaillierter den Aufbau einer beispielhaften Brennkammer 4, welche eine Verengung 11 aufweist, den sogenannten Brennkammerhals. In der inneren Schicht 12 der Brennkammerwand sind Kühlkanäle 14 ausgebildet (Fig. 2 b) bis d)), die von einem Kühlmittel, im obigen Fall von dem ersten Treibstoff, durchströmt werden. Die Kühlkanäle 14 sind auf der von der Heissgasseite abgewandten Seite der Brennkammerwand durch eine zweite Schicht 13 der Brennkammerwand abgedeckt. Durch einen Anschluss 15, der mit der vorgenannten Zuführung 3 aus Fig. 1 verbunden werden kann, wird das Kühlmittel den Kühlkanälen zugeführt und strömt entgegen der Stromrichtung 17 der heissen Gasströmung durch die Kühlkanäle 14 in Richtung auf den Einspritzkopf 9 zu (in Fig. 2a) nicht dargestellt). Dabei nimmt das Kühlmittel Wärme durch die innere Schicht 12 der Brennkammerwand auf.

Um nun zu erreichen, dass eine möglichst große Wärmemenge vom Kühlmittel aufgenommen wird, sind im vorliegenden Beispiel Querrillen 16 in der inneren Schicht 12 der Brennkammerwand vorgesehen, die im wesentlichen in Umfangsrichtung der Brennkammer verlaufen, sich also im wesentlichen quer zu der Strömungsrichtung 17 erstrecken. Die Rillen können dabei als ringförmig geschlossene Rillen vorgesehen sein, die z.B. einzeln eingestochen werden können. Dieser Fertigungsschritt kann als letzter Herstellungsschritt der Brennkammer erfolgen. Die Rillen können jedoch auch gegen die Umfangsrichtung geneigt vorgesehen sein, z.B. in Form eines Gewindes, wobei die Neigung maximal 45° gegenüber der Umfangsrichtung beträgt. Das Gewinde kann eine einfache oder auch mehrgängige Gewinde-Wendeln aufweisen.

Fig. 3 veranschaulicht beispielhaft die Dimensionsverhältnisse von innerer Schicht 12 der Brennkammerwand und Vertiefungen 16, insbesondere von Vertiefungen in Form von Querrillen. Die innere Schicht 12 der Brennkam-merwand weist über einem Kühlkanal 14 eine Dicke d_{w} von einigen Zehntel Millimetern bis einigen Millimetern, beispielsweise 0,5 - 1 mm, auf. Typische Dicken für die thermisch isolierende Grenzschicht liegen im Bereich unter 1 mm. Es reicht daher aus, die Vertiefungen mit einer Tiefe dᵥ im Bereich einiger Zehntel Millimeter vorzusehen, beispielsweise mit einer Tiefe von 0,1 bis 0,2 mm, um eine strömungstechnische Destabilisierung der thermisch isolierenden Grenzschicht zu erreichen.

Fig. 4 zeigt die detaillierte Dimensionierung der Querrillen, welche eine Tiefe dᵥ, eine Weite w, einen Radius r und einen Abstand a voneinander aufweisen. Die Tiefe der Querrillen dᵥ sei wiederum im Bereich einiger Zehntel Millimeter, beispielsweise im Bereich von 0,1 - 0,2 mm. Der Radius r der Rillen ist aufgrund der Kerbwirkung möglichst groß zu wählen, im vorliegenden Fall beispielsweise etwa das 1,5- bis 2-fache der Tiefe dᵥ der Rillen. Dadurch ergibt sich mit einer Weite w der Rillen, die im Fall der Fig. 4 etwa das 2- bis 3-fache der Tiefe dᵥ der Rillen beträgt, dass die Rillen weitgehend in Form eines Kreissegments ausgebildet sind, von fertigungsspezifischen Einflüssen auf die spezielle Formgebung der Rillen abgesehen.

Der Abstand a der Rillen voneinander kann den lokalen Anforderungen an die Stärke des Wärmeeintrages in die Brennkammerwand angepasst werden, d.h. über den Abstand a kann die lokale Dichte der Zahl der Vertiefungen eingestellt werden. Im Beispiel nach Fig. 4 beträgt der Abstand etwa 1 mm, also etwa das 10-fache der Rillentiefe dᵥ, so dass hier 10 Rillen pro cm Länge vorgesehen sind. Die Dichte kann aber auch je nach Bedarf verringert oder erhöht werden, zwischen völlig glatten Bereichen, also mit einer Dichte von 0 Rillen pro cm, bis zu beispielsweise 50 Rillen pro cm. Wie bereits eingangs ausgeführt, kann es sich als günstig erweisen, im Bereich nahe des Einspritzkopfes sowie in einem Bereich stromaufwärts des Brennkammerhalses lokal eine höhere Dichte der Rillen vorzusehen oder speziell ausschließlich in diesen Bereichen Vertiefungen, hier Rillen, vorzusehen, ansonsten die Innenwand der Brennkammer glatt auszugestalten.

Das vorstehende Beispiel wurde mit Bezugnahmen auf Vertiefungen in Form von Rillen erläutert. Es können alternativ aber auch andere Arten von Vertiefungen vorgesehen werden, die eine Aufrauhung der inneren Oberfläche der Brennkammer bewirken und die sich an den vorstehend veranschaulichten Größenordnungen für die Dimensionierung der Vertiefungen orientieren. Ein solches Alternativbeispiel wäre die Erzeugung einer aufgerauhten Oberfläche durch Strahlmittel oder auch Wasserstrahl-Spritzen.

## Patentansprüche

1. Brennkammer (4) für ein Raketentriebwerk zum Ausstoß einer heißen Gasströmung umfassend eine innere Brennkammerwand (12), wobei die innere Brennkammerwand (12) Vertiefungen (16) aufweist, die im Wesentlichen quer zur Strömungsrichtung (17) der Gasströmung verlaufen,
**dadurch gekennzeichnet,**
**dass** die Vertiefungen (16) eine Tiefe aufweisen, die maximal gleich der Dicke der thermisch isolierenden Grenzschicht ist, die von der Gasströmung in der Brennkammer (49) im Bereich der Brennkammerwand (12) bei einer glatten, nicht mit den Vertiefungen (16) versehenen Brennkammerwand ausgebildet wird.

2. Brennkammer nach Anspruch 1,
**dadurch gekennzeichnet,**
**dass** die Vertiefungen eine Tiefe aufweisen, die maximal die Hälfte der Dicke der inneren Brennkammerwand beträgt.

3. Brennkammer nach einem der Ansprüche 1 oder 2,
**dadurch gekennzeichnet,**
**dass** die Vertiefungen durch eine aufgerauhte Oberfläche gebildet sind.

4. Brennkammer nach einem der Ansprüche 1 oder 2,
**dadurch gekennzeichnet,**
**dass** die Vertiefungen als Rillen ausgebildet sind, die um maximal 45° gegen die Umfangsrichtung der Brennkammer geneigt sind.

5. Brennkammer nach Anspruch 4,
**dadurch gekennzeichnet,**
**dass** die Vertiefungen als geschlossene Rillen ausgebildet sind.

6. Brennkammer nach Anspruch 4,
**dadurch gekennzeichnet,**
**dass** die Vertiefungen als Gewinde mit mindestens einer Gewindewendel ausgebildet sind.

7. Brennkammer nach einem der Ansprüche 1 bis 6,
**dadurch gekennzeichnet,**
**dass** der Querschnitt der Vertiefungen in Form eines Kreissegments ausgebildet ist, wobei der Radius des Kreissegments größer oder gleich der Tiefe der Vertiefungen ist.

8. Brennkammer nach einem der Ansprüche 1 bis 7,
**dadurch gekennzeichnet,**
**dass** die innere Brennkammerwand Bereich mit unterschiedlicher Dichte der Anzahl von Vertiefungen aufweist.

9. Brennkammer nach Anspruch 8,
**dadurch gekennzeichnet,**
- **dass** die Brennkammer an einem ersten Ende einen Einspritzkopf aufweist und an einem dem ersten Ende gegenüberliegenden Ende einen Brennkammerhals als Auslassöffnung für die Gasströmung besitzt und
- **dass** im Bereich des Einspritzkopfes und/oder im Bereich stromaufwärts des Brennkammerhalses eine höhere Dichte der Anzahl der Vertiefungen vorgesehen ist.

## Claims

1. Combustion chamber (4) for a rocket propulsion system for ejection of a hot gas flow comprising an inner combustion chamber wall (12), with the inner combustion chamber wall (12) having depressions (16) which run essentially transversely with respect to the flow direction (17) of the gas flow,
**characterized**
**in that** the depressions (16) have a depth which is at most equal to the thickness of the thermally insulating boundary layer which is formed by the gas flow in the combustion chamber (49) in the area of the combustion chamber wall (12) with a smooth combustion chamber wall that is not provided with the depressions (16).

2. Combustion chamber according to Claim 1,
**characterized**
**in that** the depressions have a depth which is at most half the thickness of the inner combustion chamber wall.

3. Combustion chamber according to one of Claims 1 or 2,
**characterized**
**in that** the depressions are formed by a roughened surface.

4. Combustion chamber according to one of Claims 1 or 2,
**characterized**
**in that** the depressions are in the form of grooves which are inclined at a maximum of 45° with respect to the circumferential direction of the combustion chamber.

5. Combustion chamber according to Claim 4,
**characterized**
**in that** the depressions are in the form of closed grooves.

6. Combustion chamber according to Claim 4,
**characterized**
**in that** the depressions are in the form of a thread with at least one thread helix.

7. Combustion chamber according to one of Claims 1 to 6,
**characterized**
**in that** the cross section of the depressions is in the form of a circle segment, with the radius of the circle segment being greater than or equal to the depth of the depressions.

8. Combustion chamber according to one of Claims 1 to 7,
**characterized**
**in that** the inner combustion chamber wall has an area with a different density of the number of depressions.

9. Combustion chamber according to Claim 8,
**characterized**
- **in that** the combustion chamber has an injection head at a first end and has a combustion chamber neck, as an outlet opening for the gas flow, at an end opposite the first end, and
- **in that** a higher density of the number of depressions is provided in the area of the injection head and/or in the area upstream of the combustion chamber neck.

## Revendications

1. Chambre de combustion (4) pour propulseur de fusée, destinée à expulser un écoulement de gaz chauds et comprenant une paroi intérieure (12) de chambre de combustion, la paroi intérieure (12) de chambre de combustion présentant des renfoncements (16) qui s'étendent essentiellement transversalement par rapport à la direction d'écoulement (17) de l'écoulement de gaz,
**caractérisée en ce que**
la profondeur des renfoncements (16) vaut au plus l'épaisseur de la couche frontière thermiquement isolante formée par l'écoulement de gaz dans la partie de la chambre de combustion (49) occupée par la paroi intérieure (12) de chambre de combustion où la paroi intérieure de la chambre de combustion ne présente pas de renfoncements (16).

2. Chambre de combustion selon la revendication 1, **caractérisée en ce que** la profondeur des renfoncements vaut au plus la moitié de l'épaisseur de la paroi intérieure de la chambre de combustion.

3. Chambre de combustion selon les revendications 1 ou 2, **caractérisée en ce que** les renfoncements sont formés par une surface rugueuse.

4. Chambre de combustion selon les revendications 1 ou 2, **caractérisée en ce que** les renfoncements sont configurés en forme de rainures inclinées d'au plus 45° par rapport à la direction périphérique de la chambre de combustion.

5. Chambre de combustion selon la revendication 4, **caractérisée en ce que** les renfoncements sont configurés en forme de rainures fermées.

6. Chambre de combustion selon la revendication 4, **caractérisée en ce que** les renfoncements sont configurés en filet comprenant au moins une spirale de filet.

7. Chambre de combustion selon les revendications 1 à 6, **caractérisée en ce que** la section transversale des renfoncements est configurée en forme de segment de cercle, le rayon du segment de cercle étant plus grand ou égal à la profondeur des renfoncements.

8. Chambre de combustion selon les revendications 1 à 7, **caractérisée en ce que** la paroi intérieure de la chambre de combustion présente différentes densités de nombre de renfoncements.

9. Chambre de combustion selon la revendication 8,
**caractérisée en ce que** :
à une première extrémité, la chambre de combustion présente une tête d'injection et à l'extrémité opposée à la première extrémité un col de chambre de combustion qui sert d'orifice de sortie pour l'écoulement de gaz et
**en ce qu'**une plus grande densité du nombre de renfoncements est prévue dans la zone de la tête d'injection et/ou dans la zone située en amont du col de la chambre de combustion.
